# EUROPEAN PATENT APPLICATION

(11) **EP 0 611 614 A1**
(43) Date of publication of application: **24.08.1994**
(21) Application number: 94400320.1
(22) Date of filing: 14.02.1994
(51) Int. Cl.: B21D 39/04, F16L 13/16

(54) **Device for forming a mechanical connection between two concentric tubes**

(30) Priority: 16.02.1993 US 17915
(71) Applicant: B & W FUEL COMPANY, Lynchburg, VA 24506-0935 (US)
(72) Inventor: Whitt, Jeffrey Scott, Lynchburg, Virginia 24502 (US)
(74) Representative: Fort, Jacques

(57) **Abstract**

A device for forming a mechanical connection between two concentric tubes (22,23). A cylindrical tool body (12) is sized to fit closely within the innermost tube of the concentric tubes. A central axial bore through the tool body slidably receives a mandrel (14) that is movable between a first extended position and a second inserted position in the tool body. Spherical dies (16) received in sockets (28) spaced circumferentially around the tool body are movable between a first retracted position and a second extended position in response to corresponding movement of the mandrel between its first and second positions. The spherical dies create indentations (72) between the two tubes when moved to their second extended position and form the mechanical connection. A pull rod attached at a first end to the mandrel and a second end to an air cylinder is used to cause movement of the mandrel between its first and second positions.

## Description

The present invention is generally related to a mechanical attachment between two tubes and particularly to a mechanical attachment that defines the load deflection characteristics of the joint. It is particularly suitable for connecting two concentric tubes of zirconium based alloys as used for instance in nuclear fuel assemblies.

A commercial nuclear fuel assembly is formed from nuclear fuel rods, spacer grids, and guide tubes. The fuel rods are maintained in a spaced apart relationship and parallel to each other by the spacer grids. The spacer grids are formed from a plurality of interleaved metal strips on edge that define a number of cells. Each cell is sized to receive one fuel rod. A number of spacer grids are spaced apart along the length of the fuel rods to provide lateral support to the fuel rods. Several guide tubes are also received through the spacer grids in selected cells. The guide tubes provide a path and positive guidance for control rods as they are moved into or out of the fuel assembly. The guide tubes are also useful in maintaining the axial spacing of the spacer grids. One means that has been used to accomplish this is attaching tubular spacers, also known as ferrules or sleeves, to the guide tubes. The tubular spacers are either attached also to the grid or spaced in close proximity to the grid but not attached to it. The use of sleeves or tabs that are integral to the spacer grid constitutes a fixed skeletal restraint system. The use of sleeves attached to the guide tubes but spaced from and not attached to the spacer grid constitutes a floating restraint skeletal system. In the floating restraint system the load caused by the contact of one sleeve with the spacer grid prior to other sleeves contacting the grid may result in loads high enough to buckle the individual guide tube attached to the contacting sleeve since the load is not being shared by all the sleeves and guide tubes. Known methods for attachment of sleeves to the guide tubes include circumferential swaging, resistance welding, and laser welding. Circumferential swaging is an attachment method wherein the full diameter of each tubular member is expanded beyond its normal diameter. The resulting bulge or swage forms a mechanical connection between the two members. However, the swage causes a reduction in the length of the guide tube. This requires that the displacement caused by the swage be tightly controlled in order to control the resultant length change in the tube. The change in tube length must also be accounted for in the preswaged product. Variation in the wall thickness of the tube results in a material yielding differential that can cause problems with tube straightness after swaging.

An object of the invention is to provide a device for mechanically connecting two tubes which alleviates or overcomes the above problems. For that, a method for forming a mechanical connection between two concentric tubes, one tube having an inner diameter that is slightly larger than the outer diameter of the tube comprises positioning the larger tube over the smaller tube at the desired location and then forming a selected number of spherical indentations that are equally spaced and of equal size and depth between the two tubes. The spherical indentations are formed on the inner surface of the inner tube and extend outward on the exterior surface where they press against the inner surface of the outer tube. The spherical indentations form a mechanical connection between the tubes. The number of spherical indentations and their stroke (extension into the tubing members) is selected to define the desired load deflection characteristics of the joint. The tool for making the connection does not require access to the exterior of the tubes.

There is also provided a device according to claim 1. Other new and inventive features appear in the sub-claims.

For a further understanding of the nature and object of the present invention reference should be had to the following description, taken in conjunction with the accompanying drawings in which like parts are given like reference numerals, and wherein:

Fig. 1 is a side sectional view of the tool body of the invention positioned inside a tube.

Fig. 2 is a side sectional view of the tool body of the invention positioned inside a tube when making the mechanical connection.

Fig. 3 is a side sectional view that illustrates the mechanical attachment between two tubes.

Fig. 4 is a top view of the tool body of the invention as it appears when making the mechanical connection between two tubes.

Fig. 5 is a graph that compares the load/deflection characteristics of the mechanical connection of the invention with a welded connection.

Fig. 6 is a side sectional view of the invention.

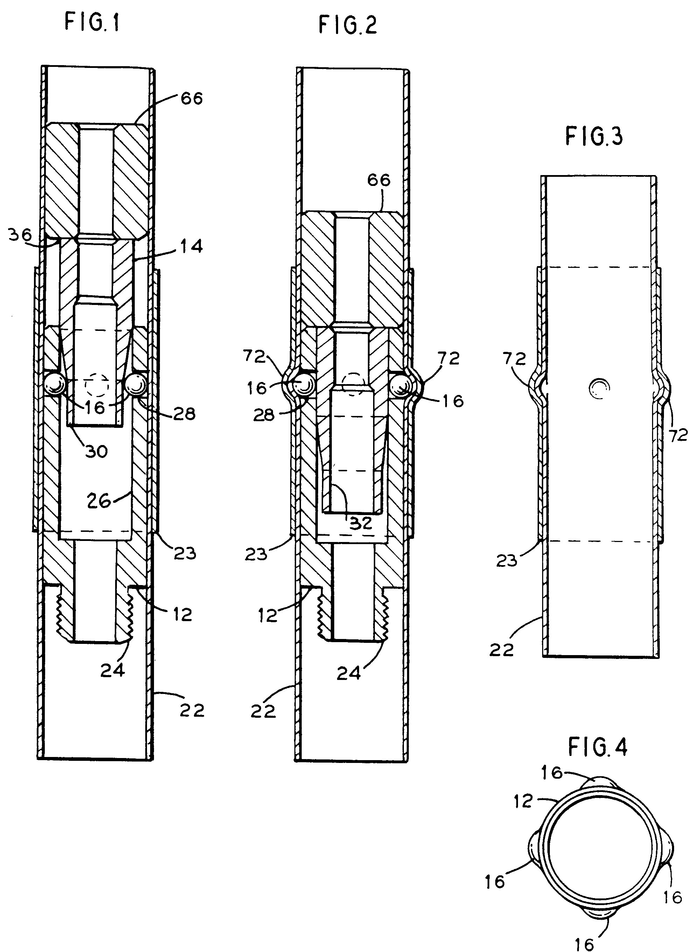

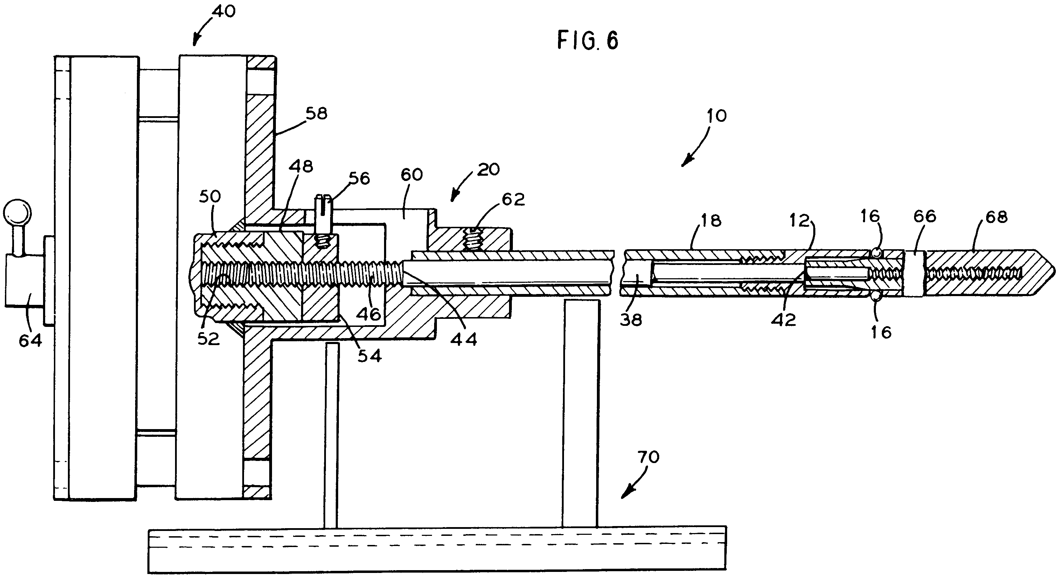

Referring to the drawings, it is seen in Fig. 6 that the invention is generally indicated by the numeral 10. As best seen in Fig. 1 and 6, tube connection device 10 is generally comprised of tool body 12, mandrel 14, spherical punch is 16, support tube 18, and means 20 for causing movement of mandrel 14 relative to main body portion 12.

As best seen in Fig. 1 and 2, tool body 12 is cylindrical and sized to fit closely within first tube 22. One end of tool body a smaller outer diameter than the remainder of tool and is provided with threads 24 for attachment to support tube 18 seen in Fig. 6. Tool body 12 is provided with central axial bore 26 therethrough that slidably receives mandrel 14 at the end of tool body 12 opposite threaded end 24. Tool body 12 is also provided with a plurality of sockets 28 equally spaced around the circumference thereof. Sockets 28 are each shaped and sized to receive and retain one spherical punch 16 such that each spherical punch 16 is movable between a first retracted position where it is within the outer diameter of tool body 12 and a second extended position where each punch 16 extends a predetermined distance beyond the outer diameter of tool body 12. Movement from the first position to the second position is caused by movement of mandrel 14.

Mandrel 14 is slidably movable within tool body 12 between a first extended position (Fig. 1) and a second inserted position (Fig. 2) relative to tool body 12. Mandrel 14 is cylindrical and sized to be slidably received within bore 26 in tool body 12. Mandrel 14 is provided with an outer diameter at a first end 30 that is smaller than the inner diameter of bore 26 such that punches 16 may be in their first retracted position when mandrel 14 is in its first extended position. The mandrel 14 tapers outwardly from first end 30 to a larger outer diameter substantially at the midsection of nandrel 14 that provides a close diametrical fit within bore 26 of tool body 12. Thus, when mandrel 14 is in its second inserted position, spherical punches 16 are forced into their second extended position as seen in Fig. 2. Mandrel 14 is provided with central axial bore 32.

Means 20 for causing movement of mandrel 14 between its first and second positions is illustrated in Fig. 6 and is comprised of pull rod 38 and air cylinder 40. Pull rod 38 is sized so as to be slidably received in support tube 18. A first end 42 of pull rod 38 has a smaller circumference than the remainder of pull rod 38 so that it may be received through bore 32 in mandrel 14. A portion of first end 42 is threaded so that pull rod 38 may be threadably engaged with lock nut 66 and nose point 68. Second end 44 of pull rod 38 is provided with threads 46 for engagement with air cylinder 40. Pull rod adaptor 48 is threadably engaged with air cylinder rod 50 by threads provided on the exterior of pull rod adaptor 48. Second end 44 of pull rod 38 is threadably engaged with pull rod adaptor 48 via a threaded central axial bore 52 through pull rod adaptor 48. Pull rod lock nut 54 is threaded on pull rod 38 against pull rod adaptor 48 to lock pull rod 38 and pull rod adaptor 48 together. Bolt 56 is threadably received in pull rod lock nut 54 and extends radially therefrom. Bolt 56 serves as a pointer to indicate the rotational and axial position of pull rod 38 and mandrel 14. Housing 58 extends axially outward from air cylinder 40 and provides an enclosure for pull rod adaptor 48 and pull rod lock nut 54. Housing 58 is provided with slot 60 to allow movement of bolt 56 in conjunction with movement of pull rod 38. Housing 58 also serves to anchor support tube 18 in position. Support tube 18 is received in housing 58 and secured in position by set screw 62. Valve control 64 is used to selectively cause axial motion of air cylinder rod 50 which moves pull rod 38 between a first extended position and a second retracted position.

Mandrel lock nut 66, seen in Fig. 1, 2 and 6 and mandrel nose point 68, seen in Fig. 6, serve as means for locking mandrel 14 in position on pull rod 38 by providing pressure of mandrel 14 against a shoulder on pull rod 38. Lock nut 66 and nose point 68 are both threadably engaged on first end 42 of pull rod 38. Base 70 may be used to support tube connection device 10.

During operations, second or outer tube 23, which has an inner diameter approximately equal to the outer diameter of first or inner tube 22, is positioned in the desired location over first tube 22. Tool body 12 is then inserted into first tube 22 such that tool body 12 and spherical punches 16 are positioned as seen in Fig. 1 with spherical punches 16 is their first retracted position and mandrel 14 in its first extended position. Valve control 64 is then used to actuate air cylinder 40 and cause pull rod 38 to move at a predetermined velocity to its second retracted position. This movement of pull rod 38 causes a corresponding movement of mandrel 14 to its second retracted position. During this movement, mandrel 14 forces spherical punches 16 into their second extended position as seen in Fig. 2 and 4. In the preferred embodiment, the pneumatic pressure in air cylinder 40 is controlled to provide a dimple stroke, movement of mandrel 14 to its second retracted position preferably at a velocity of approximately 0.20 inch per second. The movement of mandrel 14 to its first extended position is preferably at a velocity of approximately 0.32 inch per second. Spherical punches 16 are preferably carbide balls. Axial movement of mandrel 14 combined with its tapered shape provides a substantial leverage advantage in moving spherical punches 16 to their second extended position. Controlling the velocity of mandrel 14 prevents damage to spherical punches 16 and provides more precise control of the mechanical connection formed between tubes 22 and 23 and indicated by the numeral 72 in Fig. 2 and 3. Mechanical connection 72 is formed by spherical punches 16 creating coinciding spherical indentations on the inner surfaces of tubes 22 and 23. The use of spherical punches 16 minimizes the amount of wall thinning and more evenly distributes the stresses in the dimple connections. The close fit of tool body 12 within first tube 22 helps to prevent plastic deformation of the tubing in the region between the dimple formations. As a result, the effect of the dimple formations on roundness and straightness of the tubing is minimized and axial shrinkage is also minimal. The number of spherical punches 16 provided will be determined by the desired load deflection characteristics of the joint.

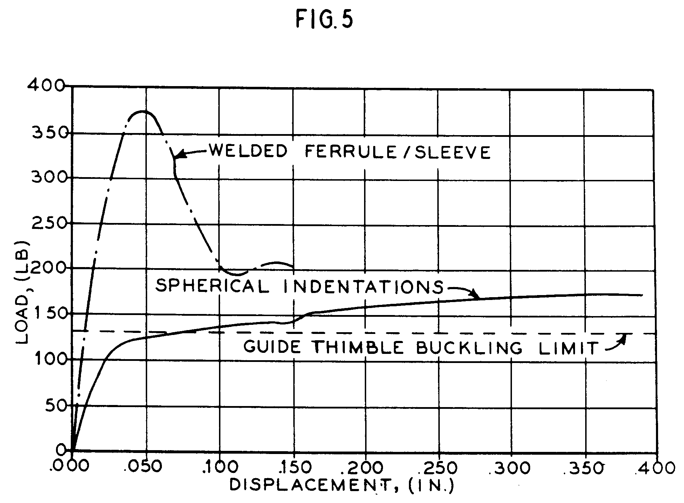

Fig. 5 is a graph that compares the load and displacement characteristics of the mechanical connection of the present invention using spherical indentations with welding the tubes together as done in the prior art. The solid line illustrates the characteristics of the mechanical connection provided by the present invention while the dotted and dashed line illustrates the characteristics of a welded connection. The dotted line illustrates the buckling limit of a size tube normally used as a guide thimble tube in a nuclear fuel assembly. It can be seen that a welded connection will receive tube buckling loads in approximately 0.01 in (0.25mm) deflection or less while the mechanical connection formed by the present invention with the use of four spherical punches 16 allows a deflection of greater than 0.05 in (0.13mm) before tube buckling loads are encountered. This provides much greater latitude in accommodating significant guide tube length changes. Another benefit is that the mechanical connection formed by the invention allows for a less restrictive positional tolerance of the ferrules. Also, the invention does not require external access to the tubing as is required with resistance and laser welding.

Because many varying and differing embodiments may be made within the scope of the inventive concept herein taught and because many modifications may be made in the embodiment herein detailed in accordance with the descriptive requirement of the law, it is to be understood that the details herein are to be interpreted as illustrative.

## Claims

1. A device for forming a mechanical connection between two concentric tubes, comprising:
a. a cylindrical tool body (12) sized to fit closely within the innermost tube (22) of the concentric tubes and a central axial bore (26) therethrough;
b. a mandrel (14) slidably received in said tool body so as to be movable between a first extended position and a second inserted position;
c. a plurality of spherical punches (16) movably received in sockets spaced circumferentially around said tool body so as to be movable between a first retracted position and a second extended position in response to corresponding movement of said mandrel between its first and second positions; and
d. means for moving said mandrel between said first and second positions.

2. The device of claim 1, wherein said means for moving said mandrel comprises:
a pull rod (38) having a first end attached to said mandrel and a second end attached to an air cylinder which selectively controls the movement of said puli rod and said mandrel.

3. The device of claim 1 or 2, further comprising a support tube (18) that slidably receives said pull rod and is attached at either end to said tool body and said air cylinder.

4. A device according to claim 1, wherein said means for moving said mandrel comprises a pull rod with first and second ends having the first end attached to said mandrel, an air cylinder attached to the second end of said pull rod for selectively controlling the movement of said pull rod and said mandrel; and a support tube that slidably receives said pull rod and is attached at either end to said tool body and said air cylinder.

5. The device of any one of claims 1-4, wherein the diameter of the exterior surface of one end of said mandrel is smaller than the interior diameter of the bore (26) in said tool body and tapers outwardly toward the opposite end of said mandrel to provide a close diametrical fit within the bore in said tool body.
